# EUROPÄISCHE PATENTANMELDUNG

(11) **EP 4 851 690 A1**
(43) Veröffentlichungstag der Anmeldung: **09.12.2026**
(21) Anmeldenummer: 26182720.8
(22) Anmeldetag: 02.06.2026
(51) Int. Cl.: G02B 7/00, G01J 1/02, G02B 7/02

(54) **OPTOELEKTRONISCHE EINHEIT, OPTOELEKTRONISCHER SENDER UND OPTOELEKTRONISCHER SENSOR SOWIE VERFAHREN ZUM KOMPENSIEREN EINER THERMISCH BEDINGTEN ÄNDERUNG EINES BRECHUNGSINDEXES EINER OPTIKANORDNUNG EINER OPTOELEKTRISCHEN EINHEIT**

(30) Priorität: 06.06.2025 DE 102025122401
(71) Anmelder: SICK AG, 79183 Waldkirch (DE)
(72) Erfinder: Döbele, Christian, 79341 Kenzingen (DE); Karle, Armin, 79283 Bollschweil (DE); Wiethege, Friedhelm, 79350 Sexau (DE)
(74) Vertreter: Manitz Finsterwald Patent- und Rechtsanwaltspartnerschaft mbB

(57) **Zusammenfassung**

Die Erfindung betrifft eine optoelektronische Einheit (10) mit einem optoelektronischen Element (20) und einer dem optoelektronischen Element (20) zugeordneten Optikanordnung (30), die optoelektronische Einheit (10) aufweisend einen Basisträger (40), auf und/oder in dem das optoelektronische Element (20) angeordnet ist, und einen Optikträger (50), auf und/oder in dem die Optikanordnung (30) angeordnet ist, wobei die Optikanordnung (30) mit Bezug auf das optoelektronischen Element (20) entlang einer optischen Achse (100) der Optikanordnung (30) in einem Anordnungsabstand (110) positioniert ist, wobei der Optikträger (50) einen ersten Befestigungsabschnitt (54), einen zweiten Befestigungsabschnitt (54) und einen Anordnungsabschnitt (52) aufweist, wobei der Optikträger (50) mit seinen Befestigungsabschnitten (54) am Basisträger (40) fixiert ist und die Optikanordnung (30) auf und/oder im Anordnungsabschnitt (52) angeordnet ist. Weiter betrifft die Erfindung einen optoelektronischer Sender (12) mit einer derartigen optoelektronischen Einheit (10) sowie einen optoelektronischer Sensor (14) mit einer derartigen optoelektronischen Einheit (10). Weiter betrifft die Erfindung ein Verfahren zum Kompensieren einer thermisch bedingten Änderung eines Brechungsindexes einer Optikanordnung (30) einer optoelektrischen Einheit (10).

## Beschreibung

Die Erfindung betrifft eine optoelektronische Einheit mit einem optoelektronischen Element und einer dem optoelektronischen Element zugeordneten Optikanordnung, die optoelektronische Einheit aufweisend einen Basisträger, auf und/oder in dem das optoelektronische Element angeordnet ist, und einen Optikträger, auf und/oder in dem die Optikanordnung angeordnet ist, wobei die Optikanordnung mit Bezug auf das optoelektronischen Element entlang einer optischen Achse der Optikanordnung in einem Anordnungsabstand positioniert ist, wobei der Optikträger einen ersten Befestigungsabschnitt, einen zweiten Befestigungsabschnitt und einen Anordnungsabschnitt aufweist, wobei der Optikträger mit seinen Befestigungsabschnitten am Basisträger fixiert ist und die Optikanordnung auf und/oder im Anordnungsabschnitt angeordnet ist. Weiter betrifft die Erfindung einen optoelektronischen Sender mit einer derartigen optoelektronischen Einheit sowie einen optoelektronischen Sensor mit einer derartigen optoelektronischen Einheit. Weiter betrifft die Erfindung ein Verfahren zum Kompensieren einer thermisch bedingten Änderung eines Brechungsindexes einer Optikanordnung einer optoelektrischen Einheit.

Optoelektronische Einheiten weisen ein optoelektronisches Element auf, insbesondere einen optoelektronischen Emitter zum Aussenden von Licht oder einen optoelektronischen Empfänger zum Detektieren von Licht. Weiter sind in den bekannten optoelektronischen Einheiten oftmals Optikanordnungen verbaut, die in den meisten Fällen bei Emittern für eine Aufweitung und bei Empfängern für eine Fokussierung des Lichtes dienen. Bei modernen optoelektronischen Einheiten werden oftmals hohe Anforderungen an diese Aufweitung beziehungsweise Fokussierung des Lichts gestellt, beispielsweise um bei einer als optischer Schalter eingesetzten optoelektronischen Einheit mit einem optoelektronischen Empfänger performante und präzise Schaltvorgänge zu erreichen.

Bei der Herstellung der optoelektronischen Einheiten wird durch Justageprozesse die Optikanordnung dreidimensional in XYZ-Richtung zum optoelektronischen Element positioniert, um optische Eigenschaften wie zum Beispiel Schielwinkel, Fokussierung und/oder Aufweitung des Lichts initial einzustellen. Diese entsprechende Anordnung wird dann fixiert, beispielsweise durch Justageklebstoff. Die bei dem Justageprozess herrschende Umgebungstemperatur stellt die Temperatur dar, auch mit Justagetemperatur bezeichnet, bei der das System eingestellt und entspannt ist, also keine thermoinduzierten Spannungen im System vorliegen. Bei dieser Betriebstemperatur sind also die Optikanordnung und das optoelektronische Element ideal zueinander positioniert, die optischen Eigenschaften sind wie initial vorgesehen.

Während des Betriebs einer optoelektronischen Einheit kann jedoch zumeist nicht vermieden werden, dass sich für die optoelektronische Einheit durch Erwärmung oder Abkühlung eine Abweichung zur Justagetemperatur einstellt. Dadurch kommt es meist zu Änderungen der optischen Eigenschaften, beispielsweise durch aufbaubedingte Abstandsänderungen zwischen dem optoelektronischen Element und der Optikanordnung, oder auch durch temperaturbedingte Änderungen eines Brechungsindexes der Optikanordnung, insbesondere von in der Optikanordnung enthaltenen Linsen.

Eine bekannte Möglichkeit, zumindest eine temperaturbedingte Änderung des Brechungsindex zu verhindern, stellt der Einsatz von Glaslinsen dar. Diese sind jedoch im Vergleich zu Kunststofflinsen wesentlich kostenintensiver. Auch sind sie deutlich schwerer, so dass der gesamte Aufbau der optoelektronischen Einheit stabiler sein muss und damit zumeist weniger kompakt bereitgestellt werden kann. Bei aufbaubedingten Änderungen des Abstands zwischen dem optoelektronischen Element und der Optikanordnung durch temperaturbedingte Längenschwankungen von Bauelementen der optoelektronischen Einheit kann sich der gleichbleibende Brechungsindex einer Glaslinse sogar negativ auswirken.

Weiter ist bekannt, insbesondere für Optikanordnungen mit Kunststofflinsen mit temperaturabhängigem Brechungsindex, diesen durch einen Aufbau der gesamten Optikanordnung, in dem sich die geometrischen Elemente lateral frei ausdehnen können, zu kompensieren. Dies wird beispielsweise erreicht durch Lagerung der optischen Elemente, insbesondere der Linse, auf Kunststoffzapfen mit bewusst gewähltem Ausdehnungskoeffizienten. Diese freie Ausdehnung von Kunststoffzapfen ist zwar für die Kompensation der optischen Eigenschaften vorteilhaft, es hat sich jedoch herausgestellt. dass ein derartiger Aufbau durch die für die freie Ausdehnung zumeist notwendige Lagerung mit Loslagern wenig robust ist. Auch ist ein derartiger Aufbau nicht immer ausreichend kompakt ausführbar.

Ausgehend von den voranstehend beschriebenen bekannten optoelektronischen Einheiten ist es daher Aufgabe der vorliegenden Erfindung, optoelektronische Einheiten, optoelektronische Sender und optoelektronische Sensoren sowie Verfahren zum Kompensieren einer thermisch bedingten Änderung eines Brechungsindexes einer Optikanordnung einer optoelektrischen Einheit des Standes der Technik zu verbessern. Insbesondere ist es Aufgabe der vorliegenden Erfindung, eine optoelektronische Einheit, einen optoelektronische Sender und einen optoelektronische Sensor sowie ein Verfahren zum Kompensieren einer thermisch bedingten Änderung eines Brechungsindexes einer Optikanordnung einer optoelektrischen Einheit bereitzustellen, die eine besonders einfache und dabei kompakte und mechanisch stabile Kompensation von temperaturabhängigen Änderungen von optischen Eigenschaften einer Optikanordnung ermöglichen.

Die Aufgabe wird gemäß der Erfindung durch eine optoelektronische Einheit gemäß dem unabhängigen Anspruch 1 gelöst. Ferner wird die Aufgabe der Erfindung durch einen optoelektronischen Sender nach Anspruch 13 und durch einen optoelektronischen Sensor nach Anspruch 14, sowie durch ein Verfahren zum Kompensieren einer thermisch bedingten Änderung eines Brechungsindexes einer Optikanordnung einer optoelektrischen Einheit nach Anspruch 15 gelöst. Weiterbildungen des erfindungsgemäßen optoelektronischen Einheit, des optoelektronischen Senders und des optoelektronischen Sensors sowie des erfindungsgemäßen Verfahrens zum Kompensieren einer thermisch bedingten Änderung eines Brechungsindexes einer Optikanordnung einer optoelektrischen Einheit ergeben sich aus den Unteransprüchen, der Beschreibung und den Zeichnungen. Dabei gelten Merkmale und Vorteile, die mit Bezug auf die erfindungsgemäße Einheit beschrieben sind auch für den erfindungsgemäßen Sender und den erfindungsgemäßen Sensor sowie das erfindungsgemäße Verfahren und jeweils umgekehrt, soweit technisch sinnvoll und umsetzbar.

Gemäß einem ersten Aspekt der Erfindung wird die Aufgabe gelöst durch eine optoelektronische Einheit mit einem optoelektronischen Element und einer dem optoelektronischen Element zugeordneten Optikanordnung, die optoelektronische Einheit aufweisend einen Basisträger, auf und/oder in dem das optoelektronische Element angeordnet ist, und einen Optikträger, auf und/oder in dem die Optikanordnung angeordnet ist, wobei die Optikanordnung mit Bezug auf das optoelektronischen Element entlang einer optischen Achse der Optikanordnung in einem Anordnungsabstand positioniert ist, wobei der Optikträger einen ersten Befestigungsabschnitt, einen zweiten Befestigungsabschnitt und einen Anordnungsabschnitt aufweist, wobei der Optikträger mit seinen Befestigungsabschnitten am Basisträger fixiert ist und die Optikanordnung auf und/oder im Anordnungsabschnitt angeordnet ist, wobei weiter der Optikträger einen ersten Kompensationsabschnitt und einen zweiten Kompensationsabschnitt aufweist, wobei sich der erste Kompensationsabschnitt zwischen dem ersten Befestigungsabschnitt und dem Anordnungsabschnitt und der zweite Kompensationsabschnitt zwischen dem zweiten Befestigungsabschnitt und dem Anordnungsabschnitt erstreckt, wobei der erste Kompensationsabschnitt und der zweite Kompensationsabschnitt mit einer Ebene senkrecht zur optischen Achse jeweils einen Aufstellwinkel größer 0° und kleiner 90° einschließen, und wobei die Kompensationsabschnitte aus einem Material gefertigt sind, welches einen derartigen thermischen Längenausdehnungskoeffizienten aufweist, so dass eine durch eine thermische Längenänderung der Kompensationsabschnitte hervorgerufene Änderung des Anordnungsabstands eine thermisch bedingte Änderung eines Brechungsindexes der Optikanordnung kompensiert oder zumindest im Wesentlichen kompensiert.

Die erfindungsgemäße optoelektronische Einheit weist als Hauptelemente ein optoelektronisches Element sowie eine Optikanordnung auf. Das optoelektronische Element kann hierbei insbesondere sowohl als optoelektronischer Emitter zum Aussenden von Licht oder als optoelektronischer Empfänger zum Detektieren von Licht ausgebildet sein, wobei auch Mischformen denkbar sind. Die Optikanordnung ist im Sinne der Erfindung eine Anordnung aus einem oder mehreren optischen Elementen wie zum Beispiel Linsen, Prismen, Spiegeln, Blenden oder ähnlichen, die zum Leiten und/oder Formen von Licht ausgebildet sind.

Die Optikanordnung ist dem optoelektronischen Element zugeordnet. Zugeordnet im Sinne der Erfindung bedeutet insbesondere, dass die Optikanordnung Lichtstrahlen, die vom optoelektronischen Element ausgesendet werden oder von diesem detektiert werden sollen, in der erfindungsgemäßen optoelektronischen Einheit zumindest entsprechend leitet, bevorzugt auch formt. Dafür sind die Optikanordnung und das optoelektronische Element bevorzug relativ zueinander ausgerichtet positioniert, wobei insbesondere das optoelektronische Element auf einer optischen Achse der Optikanordnung in einem Anordnungsabstand zu dieser angeordnet ist. Auch ein zumeist vorhandener Brennpunkt der Optikanordnung, bestimmt durch die jeweils in der Optikanordnung vorhandenen optischen Elemente beziehungsweise insbesondere deren Formen und Brechungsindizes, ist zumindest für einen vorgesehenen Sollzustand der optoelektronischen Einheit derart eingestellt, dass er an oder zumindest in unmittelbarer Nähe zum optoelektronischen Element angeordnet ist. Mit anderen Worten, der oben bereits beschriebene Anordnungsabstand zwischen der Optikanordnung und dem optoelektronischen Element kann bevorzugt im Sollzustand derart gewählt und eingestellt sein, dass sich die gewünschte Position des Brennpunkts einstellt. Eine besonders gute Lichtausbeute beim Aussenden von Licht beziehungsweise beim Detektieren von einfallendem Licht kann dadurch erreicht werden.

Der Sollzustand ist hierbei zumeist durch die Umgebungsbedingungen bestimmt, die bei einer Montage der optoelektronischen Einheit vorherrschen. Besonders ausschlaggebend ist hierbei eine Temperatur, auch mit Justagetemperatur bezeichnet, die insbesondere temperaturabhängige Eigenschaften der Bauelemente der erfindungsgemäßen optoelektronischen Einheit wie zum Beispiel insbesondere Längenausdehnungen aber auch optische Eigenschaften wie Brechungsindizes, festlegt.

Für die relative Anordnung des optoelektronischen Elements und der Optikanordnung in der optoelektronischen Einheit weist diese einen Basisträger und einen Optikträger auf. Auf und/oder im Basisträger ist das optoelektronische Element angeordnet, mit anderen Worten, das optoelektronische Element ist auf dem Basisträger befestigt und/oder der Basisträger weist eine entsprechende Aufnahme auf, in der das optoelektronische Element positioniert und bevorzugt auch ausgerichtet und/oder befestigt beziehungsweise fixiert werden kann. Analoges gilt für den Optikträger, auf und/oder in dem die Optikanordnung angeordnet ist. So ist auch die Optikanordnung direkt auf dem Optikträger und/oder in einer entsprechenden Aufnahme des Optikträgers angeordnet.

Um die voranstehend beschriebene relative Anordnung der Optikanordnung und des optoelektronischen Elements festzulegen, sind der Optikträger und der Basisträger aneinander fixiert. Für diesen Zweck weist insbesondere der Optikträger einen ersten Befestigungsabschnitt und einen zweiten Befestigungsabschnitt auf, über die der Optikträger am Basisträger fixiert werden kann beziehungsweise fixiert ist. Fixiert im Sinne der Erfindung bedeutet insbesondere in allen drei Raumdimensionen festgelegt. Mit anderen Worten, die beiden Befestigungsabschnitte sind derart am Basisträger befestigt, dass eine Bewegung der Befestigungsabschnitte relativ zum Basisträger verhindert ist. Für die Anordnung der Optikanordnung wiederum ist im Optikträger ein Anordnungsabschnitt vorgesehen. Auf und/oder in diesem Anordnungsabschnitt ist somit die Optikanordnung angeordnet, mit anderen Worten, der Anordnungsabschnitt weist die dafür nötige Form und/oder Befestigungsmittel und/oder Aufnahmen auf. Bevorzugt kann der Anordnungsabschnitt zwischen den beiden Befestigungsabschnitten im Optikträger vorgesehen sein.

Wie vorstehend beschrieben, ist die Konstruktion und insbesondere die internen Abstände wie beispielsweise der Anordnungsabstand der erfindungsgemäßen optoelektronischen Einheit für einen Sollzustand und damit für eine Justagetemperatur ausgelegt. Abweichungen von dieser Justagetemperatur, wie sie beim normalen Betrieb der optoelektronischen Einheit zumeist unvermeidbar sind, kann jedoch zu Veränderungen von Abständen, insbesondere auch des Anordnungsabstands, und insbesondere auch von optischen Eigenschaften der Optikanordnung wie deren Brechungsindex führen.

Um diesem Umstand zu begegnen weist bei der erfindungsgemäßen optoelektronischen Einheit der Optikträger zusätzlich einen ersten Kompensationsabschnitt und einen zweiten Kompensationsabschnitt auf. Die Kompensationsabschnitte können bevorzugt gleich ausgeformt sein. Jeder der Kompensationsabschnitte ist im Optikträger zwischen jeweils einem der Befestigungsabschnitte und dem Anordnungsabschnitt angeordnet. Insbesondere sind diese Befestigungsabschnitte derart angeordnet, dass sie mit einer Ebene senkrecht zur optischen Achse jeweils einen Aufstellwinkel größer 0° und kleiner 90° einschließen. Mit anderen Worten, die beiden Befestigungsabschnitte sind schräg zu der entsprechenden Ebene und damit auch schräg gegenüber der optischen Achse ausgerichtet. Bevorzugt ist der Aufstellwinkel beider Kompensationsabschnitte gleich. Insbesondere können somit die Kompensationsabschnitte symmetrisch zur optischen Achse ausgebildet und auch ausgerichtet sein.

Der Optikträger ist, wie bereits dargelegt, über die Befestigungsabschnitte am Basisträger fixiert, der wiederum das optoelektronische Element trägt. Weiter trägt der Anordnungsabschnitt die Optikanordnung, die entlang der optischen Achse im Anordnungsabstand zum optoelektronischen Element angeordnet ist. Die voranstehend beschriebene schräge Ausrichtung der Kompensationsabschnitte zur optischen Achse stellt somit auch sicher, dass die Endbereiche der Kompensationsabschnitte, an denen sie jeweils mit dem entsprechenden Befestigungsabschnitt beziehungsweise dem Anordnungsabschnitt verbunden sind, ebenfalls entlang der optischen Achse beabstandet sind. Mit anderen Worten, die beiden Kompensationsabschnitte sind auch schräg zu dem jeweiligen Befestigungsabschnitt und zum Anordnungsabschnitt ausgerichtet. Bevorzugt können die Endabschnitte beider Kompensationsabschnitte, die jeweils mit einem Befestigungsabschnitt verbunden sind, in einer gemeinsamen und senkrecht zur optischen Achse ausgerichteten Befestigungsebene, und/oder die Endabschnitte beider Kompensationsabschnitte, die jeweils mit dem Anordnungsabschnitt verbunden sind, in einer gemeinsamen und senkrecht zur optischen Achse ausgerichteten Anordnungsebene positioniert sein.

Wie voranstehend beschrieben, sind die beiden Kompensationsabschnitte schräg zwischen jeweils einem Befestigungsabschnitt und dem Anordnungsabschnitt angeordnet. Der Befestigungsabschnitt ist wiederum durch die Fixierung am Basisträger selbst fixiert. Damit ist eine Position der Befestigungsabschnitte innerhalb der erfindungsgemäßen optoelektronischen Einheit festgelegt. Mit anderen Worten, die jeweilige Verbindung eines der Kompensationsabschnitte und des entsprechenden Befestigungsabschnitts stellt ein Festlager dar. Das entgegengesetzte Ende des jeweiligen Kompensationsabschnittes ist mit dem Anordnungsabschnitt verbunden. Dadurch ergibt sich insgesamt eine sehr stabile, fachwerkartige Ausgestaltung des Optikträgers als Ganzes, da dieser mit seinen Befestigungsabschnitten fest mit dem Basisträger fixiert ist und dessen Anordnungsabschnitt durch die beiden schräg ausgerichteten Kompensationsabschnitte sicher und stabil gehalten ist. Dies ist insbesondere in der oben angeführten bevorzugten Ausformung des Optikträgers symmetrisch zur optischen Achse gegeben.

Erfindungsgemäß ist vorgesehen, dass die beiden Kompensationsabschnitte einen spezifischen thermischen Längenausdehnungskoeffizienten aufweisen. Ein thermischer Längenausdehnungskoeffizient ist eine Materialeigenschaft, bei der sich eine Ausdehnung des entsprechenden Bauteils in Abhängigkeit einer Temperatur des Bauteils ändert. Bei einer Änderung der Längenausdehnung des Kompensationsabschnittes wird also, bedingt durch die feste Lagerung der Kompensationsabschnitte am Befestigungsabschnitt, der Anordnungsabschnitt und dadurch automatisch auch die Optikanordnung durch die Längenänderung der beiden Kompensationsabschnitte verschoben. Durch das Vorhandensein von zwei derartiger Kompensationsabschnitte erfolgt dies insbesondere entlang der optischen Achse der Optikanordnung. Dies kann durch eine Ausformung der Kompensationsabschnitte oder sogar des gesamten Optikträgers symmetrisch zur optischen Achse besonders einfach sichergestellt werden. Da das optoelektronische Element weiterhin am Basisträger angeordnet ist und relativ zur Optikanordnung unverändert positioniert ist, verändert sich auf diese Weise automatisch der Anordnungsabstand zwischen der Optikanordnung und dem optoelektronischen Element.

Wie einleitend bereits dargelegt, kann sich auch ein Brechungsindex der Optikanordnung in Abhängigkeit der Betriebstemperatur der optoelektronischen Einheit ändern. Dadurch verschiebt sich automatisch auch eine Position eines Brennpunkts der Optikanordnung, zumeist entlang der optischen Achse der Optikanordnung. Für die erfindungsgemäße optoelektronische Einheit ist das Material der Kompensationsabschnitte daher erfindungsgemäß derart gewählt, dass dessen Längenausdehnungskoeffizient die oben beschriebene Änderung des Anordnungsabstands bewirkt, die der thermischen Änderung des Brechungsindex entgegengesetzt ist und diese gerade kompensiert oder zumindest im Wesentlichen kompensiert.

Mit anderen Worten, da die Befestigungsabschnitte am Basisträger fixiert sind und dadurch ein Festlager bilden, verschieben die Kompensationsabschnitte durch die thermische Änderung ihrer Längenausdehnung den Anordnungsabschnitt mit der darauf beziehungsweise darin angeordneten Optikanordnung entlang der optischen Achse, und ändern dadurch den Anordnungsabstand zwischen der Optikanordnung und dem optoelektronischen Element gerade so weit, dass die Position des Brennpunkts der Optikanordnung trotz Änderung des Brechungsindex der Optikanordnung relativ zum optoelektronischen Element unverändert bleibt. Eine gleichbleibende, temperaturunabhängige Leistungsfähigkeit der erfindungsgemäßen optoelektronischen Einheit kann dadurch ermöglicht werden.

Weiter kann bei der erfindungsgemäßen optoelektronischen Einheit vorgesehen sein, dass der Aufstellwinkel 15° bis 75°, bevorzugt 45°, beträgt. Der Aufstellwinkel zwischen den beziehungsweise dem Kompensationselement und der Ebene senkrecht zur optischen Achse bestimmt im Wesentlichen die Umsetzung beziehungsweise Übersetzung zwischen der tatsächlichen Änderung der Längenausdehnung der Kompensationselemente und der resultierenden Änderung des Anordnungsabstands. Je steiler die Anordnung der Kompensationselemente, also je größer der Aufstellwinkel, desto größer ist der Anteil der Längenänderung der Kompensationselemente, die entlang der optischen Achse wirkt und damit in eine Änderung des Anordnungsabstands umgewandelt wird. Ein Winkel von 45° hat sich hierbei als besonders geeignet erwiesen, da hier ausgehend von der Justagetemperatur sowohl Erhöhungen als auch Verringerungen der Temperatur besonders gut und insbesondere gleichermaßen kompensiert werden können.

Auch kann die erfindungsgemäße optoelektronische Einheit dadurch gekennzeichnet sein, dass der Optikträger einteilig ausgebildet ist. Mit anderen Worten, der gesamte Optikträger ist als ein einziges Bauteil ausgebildet, das insbesondere bevorzugt auch ein durchgängiges Material aufweist. Eine besonders einfache Fertigung des Optikträgers, und damit insbesondere der erfindungsgemäßen optoelektronischen Einheit, kann dadurch ermöglicht werden, da zusätzliche aufwändige Montageschritte zum Fertigstellen allein des Optikträgers vermieden werden können.

Weiter kann bei der erfindungsgemäßen optoelektronischen Einheit vorgesehen sein, dass die Optikanordnung eine Linse aus einem Kunststoffmaterial mit einem temperaturabhängigen Brechungsindex aufweist. Kunststofflinsen haben den Vorteil, dass sie im Vergleich zu Glaslinsen wesentlich weniger Gewicht aufweisen. Dies ermöglicht insbesondere, die gesamte optoelektronische Einheit zu verkleinern, da aufwändige Haltestrukturen für die Linse, die für die bereitzustellende Stabilität insbesondere auch einen vergleichsweise hohen Bauraumbedarf aufweisen, vermieden werden können. Auch sind Kunststofflinsen weniger kostenintensiv. Insbesondere weisen Kunststofflinsen, im Gegensatz zu Glaslinsen, oftmals einen Brechungsindex mit einer deutlichen Temperaturabhängigkeit auf, wodurch sie für einen Einsatz in einer erfindungsgemäßen optoelektronischen Einheit besonders geeignet sind.

Auch kann gemäß einer Ausgestaltungsform der erfindungsgemäßen optoelektronischen Einheit vorgesehen sein, dass die Linse einteilig mit dem Anordnungsabschnitt ausgebildet ist. Mit anderen Worten, die Linse und der Anordnungsabschnitt, in speziellen Ausgestaltungsformen mit einem einteiligen Optikträger sogar die Linse und der gesamte Optikträger, sind als ein einziges Bauelement ausgeformt. Bevorzugt kann dieses Bauelement auch ein durchgängiges Material aufweisen. Eine besonders einfache Fertigung der Linse und des Anordnungsabschnitts, wenn zutreffend sogar der Linse und des gesamten Optikträgers, und damit folglich der gesamten erfindungsgemäßen optoelektronischen Einheit, kann dadurch ermöglicht werden.

Weiter kann die erfindungsgemäße optoelektronische Einheit auch dadurch gekennzeichnet sein, dass die zwei Kompensationsabschnitte als ein zusammenhängendes Kompensationselement gebildet sind, wobei sich das Kompensationselement vollständig umlaufend um die Optikanordnung und weiter von beiden Befestigungsabschnitten zum Anordnungsabschnitt erstreckt. In dieser Ausgestaltungsform ist somit die Optikanordnung von allen Seiten durch das Kompensationselement umschlossen. Eine besonders gute und sichere Anordnung der Optikanordnung in der erfindungsgemäßen optoelektronischen Einheit, insbesondere beispielsweise im Hinblick auf äußere mechanische Einwirkungen wie beispielsweise Stöße, kann dadurch erreicht werden. Gleichzeitig bewirkt das umlaufende Kompensationselement, in dem die Kompensationsabschnitte aufgegangen sind, dass die Verschiebung der Optikanordnung entlang der optischen Achse bei einer Temperaturänderung besonders gleichmäßig und insbesondere ohne Verkippungen der Optikanordnung relativ zum optoelektronischen Element ermöglicht werden kann.

Gemäß einer alternativen Ausgestaltung der erfindungsgemäßen optoelektronischen Einheit kann auch vorgesehen sein, dass die zwei Kompensationsabschnitte aus zwei oder mehr getrennten Kompensationselementen gebildet sind, wobei sich jedes der zwei oder mehr Kompensationselementen von einem der Befestigungsabschnitte zum Anordnungsabschnitt erstreckt. Mit anderen Worten, in dieser Ausgestaltungsform wird die Optikanordnung an zwei oder mehr Positionen durch Kompensationselemente gehalten. Bevorzugt ist diese Halterung verliersicher ausgestaltet, beispielsweise durch ein gegenseitiges Hintergreifen der Optikanordnung und der zwei oder mehr Kompensationselemente. Eine besonders platz- und materialsparende und dennoch sichere Anordnung der Optikanordnung in der erfindungsgemäßen optoelektronischen Einheit kann dadurch erreicht werden.

Weiter kann die erfindungsgemäße optoelektronische Einheit auch dadurch gekennzeichnet sein, dass die zwei oder mehr Kompensationselemente um die optische Achse der Optikanordnung umlaufend gleichmäßig verteilt angeordnet sind. Auf diese Weise wird die Optikanordnung symmetrisch zur optischen Achse durch die Kompensationselemente gehalten und unterstützt. Insbesondere bei einer Temperaturänderung und der damit verbundenen Längenänderung der Kompensationsabschnitte, in der vorliegenden Ausführungsform somit insbesondere der Kompensationselemente, bewirkt die umlaufend gleichmäßige Verteilung der Kompensationselemente, dass die Verschiebung der Optikanordnung entlang der optischen Achse ebenfalls besonders gleichmäßig und insbesondere ohne Verkippungen der Optikanordnung relativ zum optoelektronischen Element ermöglicht werden kann.

Ferner kann bei der erfindungsgemäßen optoelektronischen Einheit auch vorgesehen sein, dass zumindest eines der Kompensationselemente entlang seiner Erstreckung zwischen dem entsprechenden Befestigungsabschnitt und dem Anordnungsabschnitt aus zwei oder mehr Segmenten aufgebaut ist. Die Segmente können starr oder gelenkig miteinander verbunden sein. Die Segmente können aus dem gleichen oder verschiedenen Materialien bestehen. Insbesondere können die Segmente gleiche oder unterschiedliche Längenausdehnungskoeffizienten aufweisen. Durch den Einsatz von segmentierten Kompensationselementen können somit die entsprechenden Kompensationsabschnitte auf vielfältige Anforderungen hin optimiert werden, neben verschiedenen Temperaturbereichen, für die die Kompensation bereitgestellt werden soll, bis hin zu beschränkten Bauraumverfügbarkeiten.

Darüber hinaus können erfindungsgemäße optoelektronische Einheiten auch dadurch gekennzeichnet sein, dass das Kompensationselement oder dessen Segmente entlang seiner Erstreckung zwischen den Befestigungsabschnitten und dem Anordnungsabschnitt eine der folgenden Formen aufweisen:
- gerade,
- konvex,
- konkav,
oder,
dass die Kompensationselemente oder deren Segmente entlang ihrer jeweiligen Erstreckung zwischen dem entsprechenden Befestigungsabschnitt und dem Anordnungsabschnitt eine der folgenden Formen aufweisen:
- gerade,
- konvex,
- konkav.

Diese Listen sind jeweils nicht abgeschlossen, so dass das Kompensationselement und/oder seine Segmente beziehungsweise die Kompensationselemente und/oder deren Segmente auch andere Formen aufweisen kann beziehungsweise können. Je nach Anforderung kann insbesondere die für das jeweils betrachtete Kompensationselement am besten geeignete Form gewählt werden. Besonders bedarfsangepasste Ausgestaltungen einer erfindungsgemäßen optoelektrischen Einheit können dadurch ermöglicht werden.

Gemäß einer weiteren Ausgestaltungsform der erfindungsgemäßen optoelektronischen Einheit kann ferner vorgesehen sein, dass in jedem der Befestigungsabschnitte ein oder mehrere Befestigungsaufnahmen vorgesehen sind und der Basisträger eine entsprechende Anzahl an Befestigungsvorsprüngen zum jeweiligen Eingreifen in eine der Befestigungsaufnahmen für ein Fixieren des Optikträgers am Basisträger aufweist. Über die Befestigungsabschnitte ist der Optikträger am Basisträger fixiert. Über ein oder mehrere, aufeinander abgestimmte Paare aus einer Befestigungsaufnahme in einem der Befestigungsabschnitte und einem entsprechenden Befestigungsvorsprung am Basisträger kann diese Fixierung effektiv unterstützt werden. Bei einer entsprechend ausgebildeten form- und/oder kraftschlüssigen Anordnung der Befestigungsvorsprünge in den Befestigungsaufnahmen kann sogar die gesamte Fixierung allein durch die Befestigungsaufnahmen und Befestigungsvorsprüngen ermöglicht werden.

Voranstehend sind Ausführungsformen beschrieben, in denen die Befestigungsaufnahmen in den Befestigungsabschnitten des Optikträgers und die Befestigungsvorsprünge am Basisträger angeordnet sind. Im Sinne der Erfindung sind von dieser Beschreibung auch Ausführungsformen mit der entsprechenden kinematischen Umkehr umfasst, also Ausführungsformen, in denen die Befestigungsvorsprünge an den Befestigungsabschnitten des Optikträgers und die Befestigungsaufnahmen am Basisträger angeordnet sind

Weiter kann die erfindungsgemäße optoelektronische Einheit auch dadurch gekennzeichnet sein, dass die Befestigungsvorsprünge mit den entsprechenden Befestigungsaufnahmen stoffschlüssig verbunden sind, wobei bevorzugt die Befestigungsvorsprünge mit den entsprechenden Befestigungsaufnahmen verklebt sind. Eine stoffschlüssige Fixierung, insbesondere ein Verkleben, stellt eine besonders sichere Fixierung der Befestigungsvorsprünge des Optikträgers am Basisträger dar. Insbesondere durch einen zusätzlich vorhandenen formschlüssigen Eingriff der Befestigungsvorsprünge in die jeweiligen Befestigungsaufnahmen kann eine ungewollte relative Bewegung des Optikträgers mit Bezug auf den Basisträger besonders sicher vermieden werden.

Gemäß einem zweiten Aspekt der Erfindung wird die Aufgabe gelöst durch einen optoelektronischen Sender mit einer optoelektronischen Einheit gemäß dem ersten Aspekt der Erfindung. Der optoelektronische Sender gemäß dem zweiten Aspekt der Erfindung ist dadurch gekennzeichnet, dass das optoelektronische Element wenigstens einen optoelektronischer Emitter, insbesondere eine LED (light emitting diode) und/oder eine Laserdiode und/oder eine VCSEL (vertical-cavity surface-emitting laser), aufweist.

Der optoelektronische Sender gemäß dem zweiten Aspekt der Erfindung weist eine optoelektronische Einheit gemäß dem ersten Aspekt der Erfindung auf. Sämtliche Merkmale und Vorteile, die voranstehend mit Bezug auf eine optoelektronische Einheit gemäß dem ersten Aspekt der Erfindung beschrieben worden sind. können somit auch durch einen optoelektronischen Sender gemäß dem zweiten Aspekt der Erfindung bereitgestellt werden.

Optoelektronische Emitter sind optoelektronische Elemente, die zum Aussenden von Licht ausgebildet sind. Das Licht kann hierbei in verschiedensten Wellenlängen, zum Beispiel Infrarot, sichtbar oder Ultraviolett, bereitgestellt werden und insbesondere sogar als Laserlicht vorliegen. Durch eine Ausgestaltung der erfindungsgemäßen optoelektronischen Einheit mit einem optoelektronischen Emitter als optoelektronischem Element kann auf besonders einfache Weise ein gegen äußere mechanische Einwirkungen stabiler optoelektronischer Sender mit einer Temperaturkompensation ermöglicht werden.

Gemäß einem dritten Aspekt der Erfindung wird die Aufgabe gelöst durch einen optoelektronischen Sensor mit einer optoelektronischen Einheit gemäß dem ersten Aspekt der Erfindung. Der erfindungsgemäße optoelektronische Sensor gemäß dem dritten Aspekt der Erfindung ist dadurch gekennzeichnet, dass das optoelektronische Element wenigstens einen optoelektronischer Empfänger, insbesondere eine Photodiode und/oder eine APD (avalanche photo diode) und/oder eine SPAD (single photon avalanche diode), aufweist.

Der optoelektronische Sensor gemäß dem dritten Aspekt der Erfindung weist eine optoelektronische Einheit gemäß dem ersten Aspekt der Erfindung auf. Sämtliche Merkmale und Vorteile, die voranstehend mit Bezug auf eine optoelektronische Einheit gemäß dem ersten Aspekt der Erfindung beschrieben worden sind. können somit auch durch einen optoelektronischen Sensor gemäß dem dritten Aspekt der Erfindung bereitgestellt werden.

Optoelektronische Empfänger sind optoelektronische Elemente, die zum Detektieren von Licht ausgebildet sind. Das Licht kann hierbei in verschiedensten Wellenlängen, zum Beispiel Infrarot, sichtbar oder Ultraviolett, vorliegen. Durch eine Ausgestaltung der erfindungsgemäßen optoelektronischen Einheit mit einem optoelektronischen Empfänger als optoelektronischem Element kann auf besonders einfache Weise ein gegen äußere mechanische Einwirkungen stabiler optoelektronischer Sensor mit einer Temperaturkompensation ermöglicht werden.

Gemäß einem vierten Aspekt der Erfindung wird die Aufgabe gelöst durch ein Verfahren zum Kompensieren einer thermisch bedingten Änderung eines Brechungsindexes einer Optikanordnung einer optoelektrischen Einheit, die optoelektronische Einheit aufweisend einen Basisträger, auf und/oder in dem ein optoelektronisches Element angeordnet wird, und einen Optikträger, auf und/oder in dem die Optikanordnung entlang einer optischen Achse der Optikanordnung in einem Anordnungsabstand zum optoelektronischen Element angeordnet wird, wobei der Optikträger einen ersten Befestigungsabschnitt, einen zweiten Befestigungsabschnitt und einen Anordnungsabschnitt aufweist, wobei der Optikträger mit seinen Befestigungsabschnitten am Basisträger fixiert wird und die Optikanordnung auf und/oder im Anordnungsabschnitt angeordnet wird, wobei weiter der Optikträger einen ersten Kompensationsabschnitt und einen zweiten Kompensationsabschnitt aufweist, wobei sich der erste Kompensationsabschnitt zwischen dem ersten Befestigungsabschnitt und dem Anordnungsabschnitt und der zweite Kompensationsabschnitt zwischen dem zweiten Befestigungsabschnitt und dem Anordnungsabschnitt erstreckt, wobei der erste Kompensationsabschnitt und der zweite Kompensationsabschnitt mit der optischen Achse jeweils einen Aufstellwinkel größer 0° und kleiner 90° einschließen, und wobei die Kompensationsabschnitte aus einem Material gefertigt werden welches einen derartigen thermischen Längenausdehnungskoeffizienten aufweist, so dass durch eine thermische Längenänderung der Kompensationsabschnitte eine Änderung des Anordnungsabstand hervorgerufen wird durch die eine thermisch bedingte Änderung eines Brechungsindexes der Optikanordnung kompensiert wird oder zumindest im Wesentlichen kompensiert wird.

Mit anderen Worten, in der optoelektronischen Einheit, mit beziehungsweise in der das erfindungsgemäße Verfahren ausgeführt wird, ist eine Optikanordnung entlang ihrer optischen Achse mit einem Anordnungsabstand zu einem optoelektronischen Element, beispielsweise einem optoelektronischen Emitter oder einem optoelektronischen Empfänger, angeordnet. Dieser Anordnungsabstand ist derart eingestellt, dass die Optikanordnung dem optoelektronischen Element zugeordnet ist, beispielsweise durch ein Positionieren eines Brennpunkts der Optikanordnung an oder zumindest nahe dem optoelektronischen Element. Durch eine dreidimensionale Fixierung des Optikträgers, der die Optikanordnung trägt, am Basisträger, der das optoelektronische Element trägt, kann dies zumindest für eine Justagetemperatur sicher festgelegt werden.

Da während eines Betriebs der optoelektronischen Einheit jedoch Abweichungen von dieser Justagetemperatur zu erwarten sind, können durch das erfindungsgemäße Verfahren die dann ebenfalls zu erwartenden Änderungen eines Brechungsindexes der Optikanordnung kompensiert werden. Dabei wird ausgenutzt, dass Änderungen des Brechungsindex den oben beschriebenen Brennpunkt zumeist entlang der optischen Achse der Optikanordnung verschieben.

Für die Kompensation dieser Bewegung des Brennpunktes wird der Optikträger der optoelektronischen Einheit im Wesentlichen mit drei Abschnitten ausgeformt. Zum einen weist der Optikträger Befestigungsabschnitte auf, über die der Optikträger am Basisträger fixiert wird und die somit als Festlager wirken. Weiter weist der Optikträger, bevorzugt zwischen den Befestigungsabschnitten angeordnet, einen Anordnungsabschnitt auf, der die Optikanordnung trägt. Zwischen den Befestigungsabschnitten und dem Anordnungsabschnitt sind nun Kompensationsabschnitte angeordnet, die die Befestigungsabschnitte mit dem Anordnungsabschnitt verbinden. Diese Kompensationsabschnitte sind bezüglich der optischen Achse schräg ausgerichtet, so dass die jeweiligen Endbereiche eines der Kompensationsabschnitte, die entsprechend mit einem Befestigungsabschnitt oder dem Anordnungsabschnitt verbunden sind, entlang der optischen Achse beabstandet zueinander angeordnet sind.

Die Kompensationsabschnitte sind weiter aus einem Material mit einem temperaturabhängigen Längenausdehnungskoeffizienten gebildet. Mit anderen Worten, auf eine Änderung der Temperatur reagieren die Kompensationsabschnitte mit einer Änderung ihrer Länge. Da die Befestigungsabschnitte als Festlager wirken, kommt es somit bei einer Temperaturänderung zu einer Bewegung des am gegenüberliegenden Ende der Kompensationsabschnitte angeordneten Anordnungsabschnitt, und damit der Optikanordnung, und zwar insbesondere entlang der optischen Achse.

Erfindungsgemäß ist vorgesehen, dass das Material der Kompensationsabschnitte derart gewählt ist, dass diese vorab beschriebene und durch die Längenausdehnung der Kompensationsabschnitte hervorgerufene Bewegung der Optikanordnung entlang der optischen Achse genau so groß ist, dass die Änderung des Brennpunkts durch die temperaturbedingte Variation des Brechungsindex der Optikanordnung gerade ausgeglichen wird.

Bevorzugt kann das erfindungsgemäße Verfahren durch eine erfindungsgemäße optoelektronische Einheit gemäß dem ersten Aspekt der Erfindung, durch einen erfindungsgemäßen optoelektronischen Sender gemäß dem zweiten Aspekt der Erfindung und/oder durch einen optoelektronischen Sensor gemäß dem dritten Aspekt der Erfindung durchgeführt werden. Sämtliche Merkmale und Vorteile, die voranstehend mit Bezug auf die erfindungsgemäße optoelektronische Einheit, den erfindungsgemäßen optoelektrischen Sensor oder mit Bezug auf den erfindungsgemäßen optoelektronischen Sensor beschrieben worden sind, können dadurch auch bei Durchführung des erfindungsgemäßen Verfahrens ermöglicht werden.

Im Folgenden werden Ausführungsformen insbesondere der erfindungsgemäßen optoelektronischen Einheit sowie des erfindungsgemäßen Verfahrens anhand von schematischen Figuren beispielhaft beschrieben. Die beschriebenen Einzelheiten sind analog auf den erfindungsgemäßen optoelektronischen Sender beziehungsweise den optoelektronischen Sensor übertragbar, da diese jeweils eine erfindungsgemäße optoelektronische Einheit aufweisen.

Es zeigen im Einzelnen
- Fig. 1: Eine erfindungsgemäße optoelektronische Einheit im montierten Zustand,
- Fig. 2: Die optoelektronische Einheit von Fig. 1 in einer Explosionsdarstellung,
- Fig.: 3 Die optoelektronische Einheit von Fig. 1 in einer Schnittdarstellung,
- Fig.: 4 Das Prinzip der Temperaturkompensation in einer erfindungsgemäßen optoelektronischen Einheit, und
- Fig. 5: Mögliche Ausführungen von Kompensationselementen.

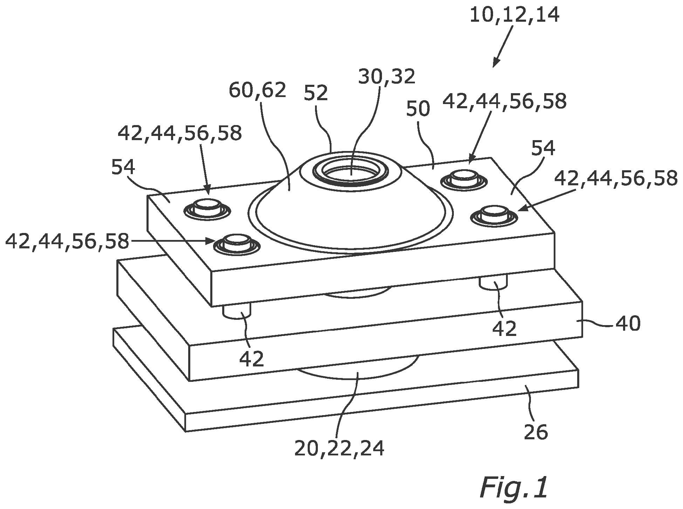

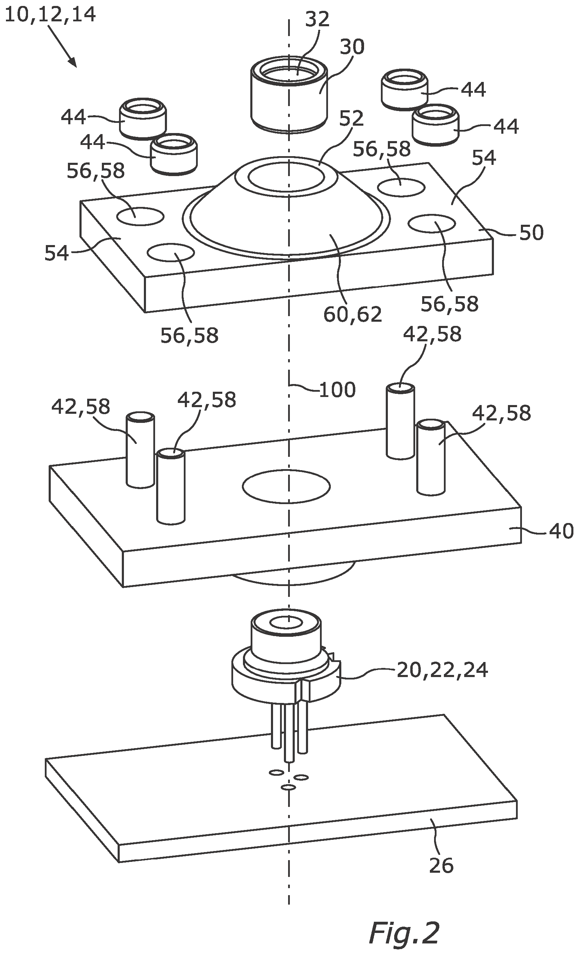

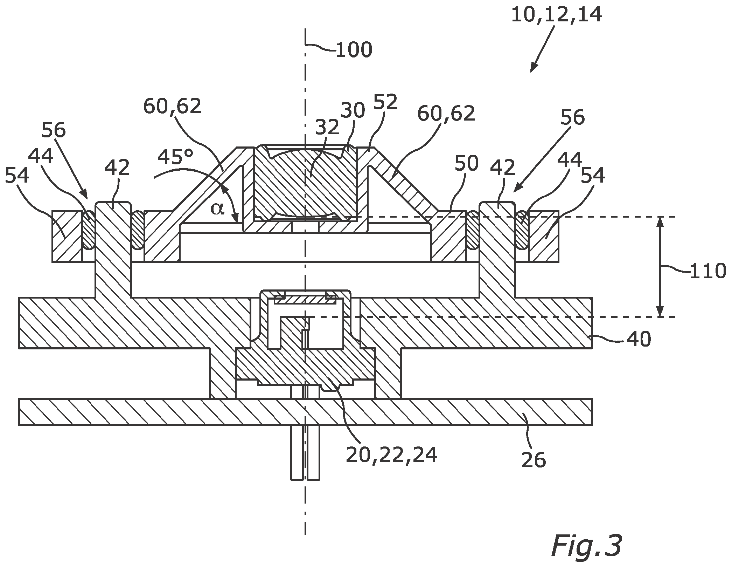

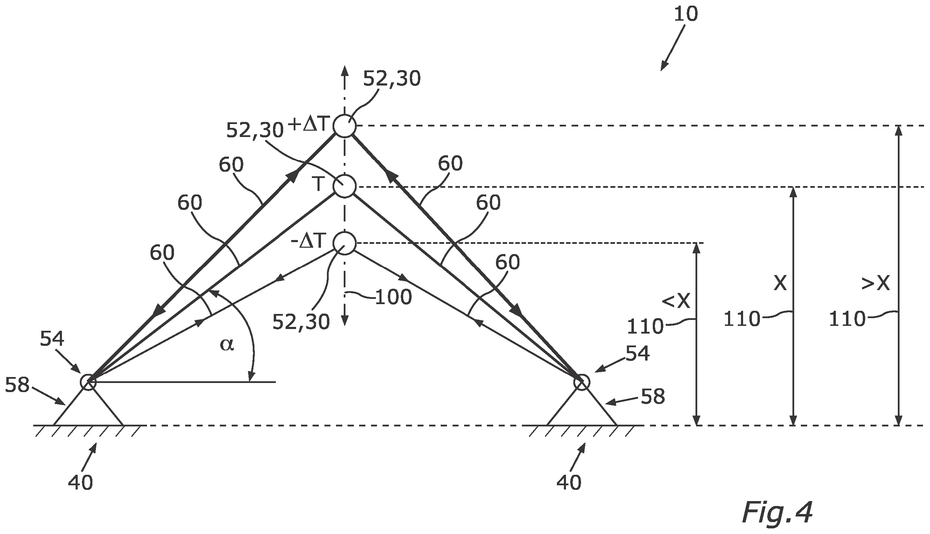

Die Fig. 1 bis 3 zeigen verschiedene Ansichten einer möglichen Ausführungsform einer erfindungsgemäßen optoelektronischen Einheit 10, nämlich insbesondere einen montierten Zustand (Fig. 1), eine Explosionsdarstellung (Fig. 2), sowie eine Schnittansicht (Fig. 3). Fig. 4 zeigt ergänzend eine schematische Darstellung des in der erfindungsgemäßen optoelektronischen Einheit 10 umgesetzten Prinzip einer Temperaturkompensation. Im Folgenden werden die Fig. 1 bis 4 gemeinsam beschrieben, wobei gegebenenfalls auf die einzelnen Figuren verwiesen wird.

Die erfindungsgemäße optoelektronische Einheit 10 weist insbesondere ein optoelektronisches Element 20 auf, das zum Beispiel auf einer Platine 26 angeordnet sein kann. Das optoelektronische Element 20 kann darüber hinaus als optoelektronischer Emitter 22 oder als optoelektronischer Empfänger 24 ausgebildet sein. Dementsprechend kann die erfindungsgemäße optoelektronische Einheit 10 auch, je nach Ausgestaltung des eingesetzten optoelektronischen Elements 20, als ein optoelektronischer Sender 12 oder als optoelektronischer Sensor 14 eingesetzt werden.

Um Licht, das vom optoelektronischen Element 20 ausgesendet oder detektiert werden soll, zu leiten, zu formen und insbesondere zu fokussieren, weist die erfindungsgemäße optoelektronische Einheit 10 eine dem optoelektronischen Element 20 zugeordnete Optikanordnung 30 auf, die bevorzugt zumindest eine Linse 32 aus einem Kunststoffmaterial umfassen kann. Für eine vorgesehene relative Anordnung der Optikanordnung 30 und des optoelektronischen Elements 20, insbesondere entlang einer optischen Achse 100 der Optikanordnung 30, sorgen in der erfindungsgemäßen optoelektronischen Einheit 10 insbesondere ein Basisträger 40, in und/oder an dem das optoelektronische Element 20 angeordnet ist, und ein Optikträger 50, in und/oder an dem die Optikanordnung 30 angeordnet ist.

Insbesondere in der Explosionsdarstellung in Fig. 2 ist dieser interne Aufbau der erfindungsgemäßen optoelektronischen Einheit 10 gut zu erkennen. Das optoelektronische Element 20 ist in einer Aufnahme des Basisträgers 40 positioniert. In der dargestellten Ausführungsform weist der Basisträger mehrere Befestigungsvorsprünge 42 auf, die zum Eingreifen in entsprechend im Optikträger 50, insbesondere in Befestigungsabschnitten 54 des Optikträgers 50, vorgesehenen Befestigungsaufnahmen 56 eingreifen. Durch Justageklebstoff 44 werden die Befestigungsvorsprünge 42 in den Befestigungsaufnahmen 56 verklebt. Der Optikträger 50 ist dadurch über seine Befestigungsabschnitte 54 am Basisträger 40 fixiert.

In der dargestellten Ausführungsform weist der Optikträger 50 mittig zwischen den zwei Befestigungsabschnitten 54 weiter einen Anordnungsabschnitt 52 auf, der die Optikanordnung 30 trägt. Die Optikanordnung 30 wird hierbei insbesondere derart in der optoelektronischen Einheit 10 angeordnet, dass sie, zumindest für eine Justagetemperatur T (vgl. Fig. 4) entlang ihrer optischen Achse 100 in einem Anordnungsabstand 110 zum optoelektronischen Element 20 angeordnet ist. Der Anordnungsabstand 110 ist hierbei zumeist derart gewählt, dass ein Brennpunkt der Optikanordnung 30 am oder zumindest im Wesentlichen am optoelektronischen Element 20 positioniert ist.

Wie dargestellt kann der Optikträger 50, umfassend Befestigungsabschnitte 54, Kompensationsabschnitte 60 und den Anordnungsabschnitt 52, einteilig ausgebildet sein. In weiter alternativen Ausgestaltungen kann die Optikanordnung 30 und der Anordnungsabschnitt 52 einteilig ausgebildet sein. Weiter alternativ kann sogar der komplette Optikträger 50 einteilig mit der Optikanordnung 30 ausgebildet sein.

Bei Betriebstemperaturen, die von oben genannter Justagetemperatur T abweichen, kommt es jedoch zumeist zu einer Verschiebung des Brennpunkts entlang der optischen Achse 110, beispielsweise insbesondere wenn wie dargestellt eine Linse 32 aus einem Kunststoffmaterial mit temperaturabhängigen Brechungsindex als Teil der Optikanordnung 30 eingesetzt ist. Um dies zu kompensieren, sind in der erfindungsgemäßen optoelektronischen Einheit 10 im Optikträger 50 zwischen den Befestigungsabschnitten 54 und dem Anordnungsabschnitt 52 Kompensationsabschnitte 60 vorgesehen. Die Kompensationsabschnitte 60 erstrecken sich jeweils derart von einem der Befestigungsabschnitte 54 bis zum Anordnungsabschnitt 52, dass sie mit einer Ebene senkrecht zur optischen Achse 100 einen Aufstellwinkel α einschließen. Bevorzugt kann der Aufstellwinkel α bei Justagetemperatur T beispielsweise 45° betragen (vgl. Fig. 4). Dadurch sind die Kompensationsabschnitte 60 schräg im Optikträger 50 ausgerichtet.

In der dargestellten Ausführung sind die Kompensationsabschnitte 60 als ein einziges Kompensationselement 62 ausgebildet, dass den Anordnungsabschnitt 52 und damit die Optikanordnung 30 vollständig umgeben. Alternativ, jedoch nicht dargestellt, können die Kompensationsabschnitte 60 auch als mehrere Kompensationselemente 62 ausgeformt sein, die dann bevorzugt umlaufend gleichmäßig um den Anordnungsabschnitt 52 beziehungsweise die Optikanordnung 30 verteilt angeordnet sind.

Das Prinzip der Temperaturkompensation der erfindungsgemäßen optoelektronischen Einheit 10 ist am besten aus den Fig. 3 und 4 ersichtlich. Die Kompensationsabschnitte 60 sind aus einem Material mit einem temperaturabhängigen Längenausdehnungskoeffizienten hergestellt. Bei Abweichungen der Betriebstemperatur von der Justagetemperatur T, in Fig. 4 mit +ΔT und - ΔT bezeichnet, ändern sich also die jeweiligen Längen der Kompensationsabschnitte 60. Durch die Fixierung der beiden Befestigungsabschnitte 54 am Basisträger 40 bildet sich im Bereich der Verbindung der Kompensationsabschnitte 60 mit jeweils einem der Befestigungsabschnitte 54 ein Festlager 58 aus. Die jeweils entgegengesetzten Enden der Kompensationsabschnitte 60 sind mit dem Anordnungsabschnitt 52 verbunden. Diese fachwerkartige Verbindung sorgt insgesamt für eine hohe Stabilität der Anordnung der Optikanordnung 30, insbesondere auch hinsichtlich einer Krafteinwirkung von außen.

Insgesamt kann somit erreicht werden, dass bei einer Temperaturänderung der Anordnungsabschnitt 52, und damit die Optikanordnung 30, entlang der optischen Achse 100 verschoben wird. Erfindungsgemäß ist vorgesehen, dass für die Kompensationsabschnitte 60 ein Material gewählt ist, dessen Längenausdehnungskoeffizient es ermöglicht, eine Änderung des Brechungsindex der Optikanordnung 30 durch eine Bewegung der gesamten Optikanordnung 30 entlang der optischen Achse 100, mit anderen Worten durch eine Anpassung des Anordnungsabstands 110, zu kompensieren. Eine temperaturunabhängige und gleichbleibend hohe Qualität der Lichtformung beziehungsweise -fokussierung durch die Optikanordnung 30 für das optoelektronische Element 20 kann dadurch erreicht werden.

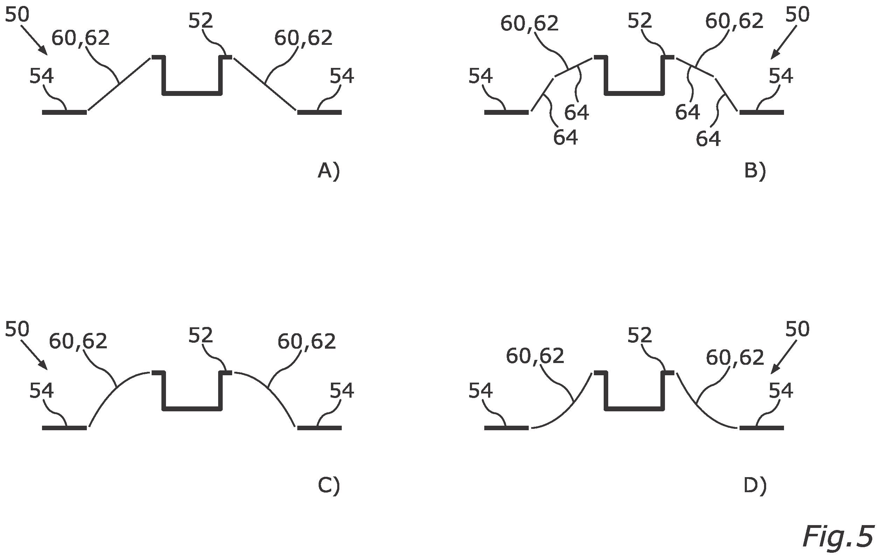

In Fig. 5 sind vier mögliche Ausgestaltungsvarianten für die Kompensationsabschnitte 60 gezeigt. Je nach Anforderung, die zum Beispiel durch einen vorhandenen Bauraum in der optoelektronischen Einheit 10 und/oder durch vorgesehene Einsatzgebiete gestellt sind, können passende Kompensationsabschnitte 60 mit einem entsprechend passenden Ausdehnungsverhalten gewählt werden. So können die Kompensationsabschnitte 60 beispielsweise gerade (Abbildung A), segmentiert (Abbildung B), konvex (Abbildung C) oder konkav (Abbildung D) ausgeformt sein.

### Bezugszeichen

- 10: Optoelektronische Einheit
- 12: Optoelektronischer Sender
- 14: Optoelektronischer Sensor

- 20: Optoelektronisches Element
- 22: Optoelektronischer Emitter
- 24: Optoelektronischer Empfänger
- 26: Platine

- 30: Optikanordnung
- 32: Linse

- 40: Basisträger
- 42: Befestigungsvorsprung
- 44: Justageklebstoff

- 50: Optikträger
- 52: Anordnungsabschnitt
- 54: Befestigungsabschnitt
- 56: Befestigungsaufnahme
- 58: Festlager

- 60: Kompensationsabschnitt
- 62: Kompensationselement
- 64: Segment

- 100: Optische Achse
- 110: Anordnungsabstand

- α: Aufstellwinkel
- T: Justagetemperatur

## Patentansprüche

1. Optoelektronische Einheit (10) mit einem optoelektronischen Element (20) und einer dem optoelektronischen Element (20) zugeordneten Optikanordnung (30),
die optoelektronische Einheit (10) aufweisend einen Basisträger (40), auf und/oder in dem das optoelektronische Element (20) angeordnet ist, und einen Optikträger (50), auf und/oder in dem die Optikanordnung (30) angeordnet ist, wobei die Optikanordnung (30) mit Bezug auf das optoelektronischen Element (20) entlang einer optischen Achse (100) der Optikanordnung (30) in einem Anordnungsabstand (110) positioniert ist, wobei der Optikträger (50) einen ersten Befestigungsabschnitt (54), einen zweiten Befestigungsabschnitt (54) und einen Anordnungsabschnitt (52) aufweist, wobei der Optikträger (50) mit seinen Befestigungsabschnitten (54) am Basisträger (40) fixiert ist und die Optikanordnung (30) auf und/oder im Anordnungsabschnitt (52) angeordnet ist,
wobei weiter der Optikträger (50) einen ersten Kompensationsabschnitt (60) und einen zweiten Kompensationsabschnitt (60) aufweist, wobei sich der erste Kompensationsabschnitt (60) zwischen dem ersten Befestigungsabschnitt (54) und dem Anordnungsabschnitt (52) und der zweite Kompensationsabschnitt (60) zwischen dem zweiten Befestigungsabschnitt (54) und dem Anordnungsabschnitt (52) erstreckt, wobei der erste Kompensationsabschnitt (60) und der zweite Kompensationsabschnitt (60) mit einer Ebene senkrecht zur optischen Achse (100) jeweils einen Aufstellwinkel (α) größer 0° und kleiner 90° einschließen, und wobei die Kompensationsabschnitte (60) aus einem Material gefertigt sind, welches einen derartigen thermischen Längenausdehnungskoeffizienten aufweist, so dass eine durch eine thermische Längenänderung der Kompensationsabschnitte (60) hervorgerufene Änderung des Anordnungsabstands (110) eine thermisch bedingte Änderung eines Brechungsindexes der Optikanordnung (30) kompensiert oder zumindest im Wesentlichen kompensiert.

2. Optoelektronische Einheit (10) nach Anspruch 1,
**dadurch gekennzeichnet,**
**dass** der Aufstellwinkel (α) 15° bis 75°, bevorzugt 45°, beträgt.

3. Optoelektronische Einheit (10) nach Anspruch 1 oder 2,
**dadurch gekennzeichnet,**
**dass** der Optikträger (50) einteilig ausgebildet ist.

4. Optoelektronische Einheit (10) nach einem der vorstehenden Ansprüche,
**dadurch gekennzeichnet,**
**dass** die Optikanordnung (30) eine Linse (32) aus einem Kunststoffmaterial mit einem temperaturabhängigen Brechungsindex aufweist.

5. Optoelektronische Einheit (10) nach Anspruch 4,
**dadurch gekennzeichnet,**
**dass** die Linse (32) einteilig mit dem Anordnungsabschnitt (52) ausgebildet ist.

6. Optoelektronische Einheit (10) nach einem der vorstehenden Ansprüche,
**dadurch gekennzeichnet,**
**dass** die zwei Kompensationsabschnitte (60) als ein zusammenhängendes Kompensationselement (62) gebildet sind, wobei sich das Kompensationselement (62) vollständig umlaufend um die Optikanordnung (30) und weiter von beiden Befestigungsabschnitten (54) zum Anordnungsabschnitt (52) erstreckt.

7. Optoelektronische Einheit (10) nach einem der vorstehenden Ansprüche 1 bis 5,
**dadurch gekennzeichnet,**
**dass** die zwei Kompensationsabschnitte (60) aus zwei oder mehr getrennten Kompensationselementen (62) gebildet sind, wobei sich jedes der zwei oder mehr Kompensationselementen (62) von einem der Befestigungsabschnitte (54) zum Anordnungsabschnitt (52) erstreckt.

8. Optoelektronische Einheit (10) nach Anspruch 7,
**dadurch gekennzeichnet,**
**dass** die zwei oder mehr Kompensationselemente (62) um die optische Achse (100) der Optikanordnung (30) umlaufend gleichmäßig verteilt angeordnet sind.

9. Optoelektronische Einheit (10) nach einem der vorstehenden Ansprüche 6 bis 8,
**dadurch gekennzeichnet,**
**dass** zumindest eines der Kompensationselemente (62) entlang seiner Erstreckung zwischen dem entsprechenden Befestigungsabschnitt (54) und dem Anordnungsabschnitt (52) aus zwei oder mehr Segmenten (64) aufgebaut ist.

10. Optoelektronische Einheit (10) nach einem der vorstehenden Ansprüche 6 bis 9,
**dadurch gekennzeichnet,**
**dass** das Kompensationselement (62) oder dessen Segmente (64) entlang seiner Erstreckung zwischen den Befestigungsabschnitten (54) und dem Anordnungsabschnitt (52) eine der folgenden Formen aufweisen:
- gerade,
- konvex,
- konkav,
oder,
**dass** die Kompensationselemente (62) oder deren Segmente (64) entlang ihrer jeweiligen Erstreckung zwischen dem entsprechenden Befestigungsabschnitt (54) und dem Anordnungsabschnitt (52) eine der folgenden Formen aufweisen:
- gerade,
- konvex,
- konkav.

11. Optoelektronische Einheit (10) nach einem der vorstehenden Ansprüche,
**dadurch gekennzeichnet,**
**dass** in jedem der Befestigungsabschnitte (54) ein oder mehrere Befestigungsaufnahmen (56) vorgesehen sind und der Basisträger (40) eine entsprechende Anzahl an Befestigungsvorsprüngen (42) zum jeweiligen Eingreifen in eine der Befestigungsaufnahmen (56) für ein Fixieren des Optikträgers (50) am Basisträger (40) aufweist.

12. Optoelektronische Einheit (10) nach Anspruch 11,
**dadurch gekennzeichnet,**
**dass** die Befestigungsvorsprünge (42) mit den entsprechenden Befestigungsaufnahmen (56) stoffschlüssig verbunden sind, wobei bevorzugt die Befestigungsvorsprünge (42) mit den entsprechenden Befestigungsaufnahmen (56) verklebt sind.

13. Optoelektronischer Sender (12) mit einer optoelektronischen Einheit (10) nach einem der vorstehenden Ansprüche,
**dadurch gekennzeichnet,**
**dass** das optoelektronische Element (20) wenigstens einen optoelektronischer Emitter (22), insbesondere eine LED (light emitting diode) und/oder eine Laserdiode und/oder eine VCSEL (vertical-cavity surface-emitting laser), aufweist.

14. Optoelektronischer Sensor (14) mit einer optoelektronischen Einheit (10) nach einem der vorstehenden Ansprüche 1 bis 12,
**dadurch gekennzeichnet,**
**dass** das optoelektronische Element (20) wenigstens einen optoelektronischer Empfänger (24), insbesondere eine Photodiode und/oder eine APD (avalanche photo diode) und/oder eine SPAD (single photon avalanche diode), aufweist.

15. Verfahren zum Kompensieren einer thermisch bedingten Änderung eines Brechungsindexes einer Optikanordnung (30) einer optoelektrischen Einheit (10),
die optoelektronische Einheit (10) aufweisend einen Basisträger (40), auf und/oder in dem ein optoelektronisches Element (20) angeordnet wird, und einen Optikträger (50), auf und/oder in dem die Optikanordnung (30) entlang einer optischen Achse (100) der Optikanordnung (30) in einem Anordnungsabstand (110) zum optoelektronischen Element (20) angeordnet wird, wobei der Optikträger (50) einen ersten Befestigungsabschnitt (54), einen zweiten Befestigungsabschnitt (54) und einen Anordnungsabschnitt (52) aufweist, wobei der Optikträger (50) mit seinen Befestigungsabschnitten (54) am Basisträger (40) fixiert wird und die Optikanordnung (30) auf und/oder im Anordnungsabschnitt (52) angeordnet wird,
wobei weiter der Optikträger (50) einen ersten Kompensationsabschnitt (60) und einen zweiten Kompensationsabschnitt (60) aufweist, wobei sich der erste Kompensationsabschnitt (60) zwischen dem ersten Befestigungsabschnitt (54) und dem Anordnungsabschnitt (52) und der zweite Kompensationsabschnitt (60) zwischen dem zweiten Befestigungsabschnitt (54) und dem Anordnungsabschnitt (52) erstreckt, wobei der erste Kompensationsabschnitt (60) und der zweite Kompensationsabschnitt (60) mit der optischen Achse (100) jeweils einen Aufstellwinkel (α) größer 0° und kleiner 90° einschließen, und wobei die Kompensationsabschnitte (60) aus einem Material gefertigt werden welches einen derartigen thermischen Längenausdehnungskoeffizienten aufweist, so dass durch eine thermische Längenänderung der Kompensationsabschnitte (60) eine Änderung des Anordnungsabstand (110) hervorgerufen wird durch die eine thermisch bedingte Änderung eines Brechungsindexes der Optikanordnung (30) kompensiert wird oder zumindest im Wesentlichen kompensiert wird.
